# EUROPEAN PATENT SPECIFICATION

(11) **EP 3 494 178 B1**
(45) Date of publication and mention of the grant of the patent: **03.06.2020**
(21) Application number: 17751703.4
(22) Date of filing: 03.08.2017
(51) Int. Cl.: C08L 83/04

(54) **ELASTOMERIC COMPOSITIONS AND THEIR APPLICATIONS**
ELASTOMERZUSAMMENSETZUNGEN UND DEREN ANWENDUNGEN
COMPOSITIONS ÉLASTOMÈRES ET LEURS APPLICATIONS

(30) Priority: 03.08.2016 GB 201613413
(43) Date of publication of application: 12.06.2019
(73) Proprietor: Dow Silicones Corporation, Midland, MI 48686-0994 (US)
(72) Inventor: GUBBELS, Frederic, 7180 Seneffe (BE)
(74) Representative: Donlan, Andrew Michael
(86) International application number: PCT/EP2017/069743
(87) International publication number: WO 2018/024856

(56) References cited:
- WO-A1-2007/117552
- WO-A1-2016/120270

## Description

The present disclosure generally relates to silicone gels cured via a condensation cure chemistry and their use in encapsulating, sealing or filling of electrical and/or electronic parts, which, compared to conventional known silicone gels, exhibit good bonding to the electrical or electronic parts even when used under high-temperature conditions.

In many instances gels used as coating, potting, and encapsulating materials for electrical and/or electronic parts must maintain adhesion to substrates and/or other materials. In electronics for example, gels are a special class of encapsulants that cure to form an extremely soft material and perform many important functions in electronics. They are typically used to provide high levels of stress relief to sensitive circuitry and to protect electronic assemblies and components from adverse environments by:
(a) functioning as dielectric insulation,
(b) protecting the circuit from moisture and other contaminants and
(c) relieving mechanical and thermal stress on components.

In such situations the gels are required to adhere to electronic and electrical components and/or printed circuit boards in addition to the electrical connectors and conductors that pass through the gel which is functioning as a coating or encapsulating material.

Silicone gel compositions have been widely used as sealants and fillers for electrical or electronic parts because they form silicone gels having good stress relaxation, electrical characteristics, heat resistance and weather resistance upon cure.

Examples of such silicone gel compositions are described in e.g. EP 0069451 which discloses a silicone gel composition comprising an organopolysiloxane containing vinyl groups having a branched structure, an organopolysiloxane containing hydrogen atoms bonded to silicon atoms, and a hydrosilylation reaction catalyst; and JPH03-19269(B2) disclosing a silicone gel composition comprising an organopolysiloxane containing vinyl groups, having a branched structure and having a viscosity of from 20 to 10,000 centistokes at 25°C, a linear organopolysiloxane capped by vinyl groups at both ends of its polymer chain, a linear organopolysiloxane containing hydrogen atoms bonded to silicon atoms only at both ends of its polymer chain, and a hydrosilylation reaction catalyst.

Recently, the operating temperature of electronic parts, e.g. silicon chips, has risen from about 150°C in the past to currently about 175°C, and due to the increased utilisation of Si-C semiconductors, operating temperatures of, for example, 180°C or above are often required. When a gel obtained from a conventional hydrosilylation cure type, silicone gel composition is used under such temperature conditions, air bubbles, cracks and a hard inflexible crust often occur causing problems regarding reliability, durability and stability of the electrical or electronic part filled therewith. This problem is pronounced particularly in cases where a conventional silicone gel composition seals or fills an electrical or electronic part having a complex structure, for example, a structure in which the space between electrodes, between electrical elements or between an electrical element and the package in the electrical or electronic part is narrow, or having a structure in which the silicone gel is unable to follow the expansion and contraction of electrical and/or electronic part. By exposing such an electrical or electronic part to high-temperature conditions, the aforementioned bubbles, cracks and the inflexible crust may occur in the silicone gel, and the subsequent reliability of the electrical or electronic part may thus be greatly reduced. Additionally, to use this hydrosilylation cured silicone gel for protecting an electrical or electronic part, it must maintain good bonding with the electrical or electronic part even when exposed to high-temperature conditions.

The ingredients used in the composition to make hydrosilylation cured gels are based on addition (hydrosilylation) cure chemistry, i.e. they are cured by the reaction of a silicon hydride group with an unsaturated carbon radical with the help of a catalyst, which is typically a platinum based compound. Historically the industry has preferred hydrosilylation cure compositions of this type for these applications because they immediately cure in bulk i.e. throughout the body of the compound, resulting in a cured gel material in a matter of minutes whilst condensation cure systems are significantly slower, because they generally cure via a skin or diffusion process - curing from the sealant/air interface through the body of the gel composition/sealant with, for example, titanate cured condensation processes taking e.g. up to 7 days curing per 6 mm of depth of the body of the uncured material. Two part tin cured condensation systems do cure over a shorter period, but they are not desired for e.g. electronics applications because they undergo reversion (i.e. depolymerisation) at temperatures above 80°C. Moreover, tin based condensation cure compositions generate tough elastomers, which do not provide the required stress relief properties for electronic devices.

Whilst from a cure speed standpoint gels made from these hydrosilylation cure compositions are excellent there are several potential problems and/or disadvantages with the use of these types of products. Firstly, they are generally cured at elevated temperature (i.e. temperatures significantly above room temperature). The hydrosilylation compositions can be contaminated and rendered uncurable due to inactivation of platinum based cure catalysts. The platinum catalysts are sensitive and may be poisoned by amine containing compounds, sulphur containing compounds and phosphorus containing compounds.

It is well known to people skilled in the art that alkoxy titanium compounds -i.e. alkyl titanates- are suitable catalysts for formulating one component moisture curable silicones (References: Noll, W.; Chemistry and Technology of Silicones, Academic Press Inc., New York, 1968, p. 399, Michael A. Brook, silicon in organic, organometallic and polymer chemistry, John Wiley & sons, Inc. (2000), p. 285). Titanate catalysts have been widely described for their use to formulate skin or diffusion cured one-part condensation curing silicone elastomers. These formulations are typically available in one-part packages that are applied in a layer that is thinner than typically 15 mm. Layers thicker than 15 mm are known to lead to uncured material in the depth of the material, because the moisture is very slow to diffuse in very deep sections. Skin or diffusion cure (e.g. moisture/condensation) takes place when the initial cure process takes place by the formation of a cured skin at the composition/air interface subsequent to the sealant/encapsulant being applied on to a substrate surface. Subsequent to the generation of the surface skin the cure speed is dependent on the speed of diffusion of moisture from the sealant/encapsulant interface with air to the inside (or core), and the diffusion of condensation reaction by-product/effluent from the inside (or core) to the outside (or surface) of the material and the gradual thickening of the cured skin over time from the outside/surface to the inside/core.

Multi component compositions designed to activate condensation cure in the bulk of the product do not use titanium based catalysts. They generally use other metal catalysts such as tin or zinc catalysts, e.g. dibutyl tin dilaurate, tin octoate and/or zinc octoate (Noll, W.; Chemistry and Technology of Silicones, Academic Press Inc., New York, 1968, p. 397). In silicone compositions stored before use in two or more parts, one-part contains a filler which typically contains the moisture required to activate condensation cure in the bulk of the product. Unlike the previously mentioned diffusion cure one-part system, two-part condensation cure systems, once mixed together, enable bulk cure even in sections greater than 15 mm in depth. In this case the composition will cure (subsequent to mixing) throughout the material bulk. If a skin is formed, it will be only in the first minutes after application. Soon after, the product will become a solid in the entire mass. Titanate catalysts are not used for curing these types of two part compositions because it is well known that in the presence of a significant amount of moisture alkyl titanate catalysts will fully hydrolyse to form tetrahydroxy titanate, which is insoluble in silicone. This form of titanium loses its catalytic efficiency, leading to uncured systems. Hence, it would be beneficial to identify a tin catalyst-free alternative condensation cure material such as a gel suitable for encapsulating, sealing or filling of electrical and/or electronic parts, which, compared to conventional known silicone gels, exhibit good bonding to the electrical or electronic parts even and do not undergo reversion when used under high-temperature conditions. Document WO2007/117552 discloses a composition that can be suitably used as a sealant and comprises a silanol-terminated polysiloxane, a crosslinker with hydrolysable groups, a catalyst which can be a titanate and possibly an antioxidant.

There is provided a silicone material which is the condensation reaction product of the following composition:
(i) at least one condensation curable silyl terminated polymer having at least one, typically at least two hydroxyl functional groups per molecule;
(ii) a cross-linker selected from the group of
   - silanes having at least 2 hydrolysable groups, alternatively at least 3 hydrolysable groups per molecule group; and/or
   - silyl functional molecules having at least 2 silyl groups, each silyl group containing at least one hydrolysable group,
(iii) a condensation catalyst selected from the group of titanates and/or zirconates, and
(iv) at least one chemical compound that prevents or scavenges the formation of free radicals;
characterized in that the molar ratio of total silicon bonded hydroxyl groups to hydrolysable groups is between 0.5:1 to 2:1 for silanes and between 0.5:1 and 10:1 for silyl functional molecules; and the molar ratio of catalyst M-OR functions to the total silicon bonded hydroxyl groups is comprised between 0.01:1 and 0.5:1, where M is titanium or zirconium.

The present invention describes a condensation curable silicone composition comprising:
(i) at least one condensation curable silyl terminated polymer having at least one, typically at least two hydroxyl functional groups per molecule;
(ii) a cross-linker selected from the group of
   - silanes having at least 2 hydrolysable groups, alternatively at least 3 hydrolysable groups per molecule group; and/or
   - silyl functional molecules having at least 2 silyl groups, each silyl group containing at least one hydrolysable group,
(iii) a condensation catalyst selected from the group of titanates and/or zirconates, and
(iv) at least one chemical compound that prevents or scavenges the formation of free radicals;
characterized in that the molar ratio of total silicon bonded hydroxyl groups to hydrolysable groups is between 0.5:1 to 2:1 for silanes and between 0.5:1 and 10:1 for silyl functional moleculessilyl functional molecules; and the molar ratio of catalyst M-OR functions to the total silicon bonded hydroxyl groups is comprised between 0.01:1 and 0.5:1, where M is titanium or zirconium.

It is to be understood that for the sake of this application that "total hydrolysable groups" excludes both moisture and silicon bonded hydroxyl groups present in the composition.

The total silicon bonded hydroxyl (Si-OH) molar content is calculated for 100 g of the mixed formulation. The total silicon bonded hydroxyl molar content related to a polymer is equal to the amount in g of hydroxyl containing polymer in 100g of the mixed product divided by the number average molecular weight (Mn) of the polymer multiply by the average number of hydroxyl functions present in the polymer, typically 2. If there are several hydroxyl functional polymers in the formulation, the sum of the molar content of each polymer is summed up to constitute the total silanol molar content in the formulation.

The number average molecular weight (Mn) and weight average molecular weight (Mw) of silicone can also be determined by Gel permeation chromatography (GPC). This technique is a standard technique, and yields values for Mw (weight average), Mn (number average) and polydispersity index (PI) (where PI=Mw/Mn).

Mn value provided in this application have been determined by GPC and represent a typical value of the polymer used. If not provided by GPC, the Mn may also be obtained from calculation based on the dynamic viscosity of said polymer.

The total hydrolysable groups molar content is calculated for 100g of the mixed formulation. The molar content of hydrolysable groups related to a substance is equal to the amount in g of the molecule that contains the hydrolysable groups in 100g of the mixed product divided by the molecular weight of the molecule or the number average molecular weight (Mn) in case it is a polymeric molecule multiplied by the average number of hydrolysable functions present in the molecule. The sum of the molar content of each molecule or polymer is summed up to constitute the total molar content of hydrolysable groups in the formulation.

The molar ratio of total silicon bonded hydroxyl groups to total hydrolysable groups is then calculated by dividing the total molar content of silicon bonded hydroxyl (Si-OH) groups in polymer (i) by the total molar content of hydrolysable groups from cross-linker (ii). The catalyst M-OR value is = [(g of Titanate catalyst)*(number of OR in compound)] divided by the (molecular weight of Titanium catalyst).

The silicone material is in the form of a gel or an elastomer.

The main advantages of these compositions are that they cure at room temperature, are more resistant to contaminants than platinum cured silicone compositions and they age well and exhibit excellent bonding to electrical or electronic parts even when used under high-temperature conditions, e.g. they won't undergo reversion unlike elastomers cured using tin based catalysts. Furthermore, electrical or electronic parts are generated which have high reliability and stability even under high-temperature conditions because of the presence of the elastomer described above. Additionally, by applying the silicone material onto electrical and/or electronic parts there is a provided a method of protecting e.g. semiconductor devices, electrical or electronic parts such as, for sake of example, power devices, having high reliability and stability even under high-temperature conditions.

Polymer (i) is at least one moisture/condensation curable silyl terminated polymer. Any suitable moisture/condensation curable silyl terminated polymer may be utilised including polydialkyl siloxanes, alkylphenyl siloxane, or organic based polymers with silyl terminal groups e.g. silyl polyethers, silyl acrylates and silyl terminated polyisobutylenes or copolymers of any of the above. Preferably the polymer is a polysiloxane based polymer containing at least one hydroxyl, most preferably the polymer comprises two terminal hydroxyl groups. Examples of suitable hydroxyl containing terminal groups include - Si(OH)₃,-(R^{a})Si(OH)₂, -(R^{a})₂Si(OH), or -(R^{a})₂ Si -R^{c}- SiR^{d}ₚ(OH)₃₋ₚ where each R^{a} independently represents a monovalent hydrocarbyl group, for example, an alkyl group, in particular having from 1 to 8 carbon atoms, (and is preferably methyl); each R^{d} group is independently an alkyl group in which the alkyl groups suitably have up to 6 carbon atoms; R° is a divalent hydrocarbon group having up to 12 carbon atoms which may be interrupted by one or more siloxane spacers having up to six silicon atoms; and p has the value 0, 1 or 2.

Polymer (i) may have the general formula (1)

X³-A-X¹ (1)

where X³ and X¹ are independently selected from siloxane groups which terminate in hydroxyl or hydrolysable groups and A is a siloxane and/or organic containing polymeric chain, alternatively a siloxane polymeric chain.

Examples of hydroxyl-terminating groups X³ or X¹ include -Si(OH)₃, -(R^{a})Si(OH)₂, -(R^{a})₂Si(OH), or-(R^{a})₂ Si -R^{c}-Si (R^{d})ₚ(OH)₃₋ₚ as defined above. Preferably the X³ and/or X¹ terminal groups are hydroxydialkyl silyl groups, e.g. hydroxydimethyl silyl groups.

Examples of suitable siloxane groups in polymeric chain A of formula (1) are those which comprise a polydiorgano-siloxane chain. Thus, polymeric chain A preferably includes siloxane units of formula (2)

-(R⁵ₛSiO_{(4-s)/2})- (2)

in which each R⁵ is independently an organic group such as a hydrocarbyl group having from 1 to 10 carbon atoms optionally substituted with one or more halogen group such as chlorine or fluorine and s is 0, 1 or 2, typically s is about 2. Particular examples of groups R⁵ include methyl, ethyl, propyl, butyl, vinyl, cyclohexyl, phenyl, tolyl group, a propyl group substituted with chlorine or fluorine such as 3,3,3-trifluoropropyl, chlorophenyl, beta-(perfluorobutyl)ethyl or chlorocyclohexyl group. Suitably, at least some or substantially all of the groups R⁵ are methyl.

Typically the polymers of the above type will have a viscosity in the order of 1,000 to Brookfield cone plate viscometer (RV DIII) using the most appropriate cone plate for the viscosity concerned.

Typical polymer (i) containing units of formula (2) are thus polydiorganosiloxanes having terminal, silicon-bound hydroxyl groups or terminal, silicon-bound organic radicals which can be hydrolysed using moisture as defined above. The polydiorganosiloxanes may be homopolymers or copolymers. Mixtures of different polydiorganosiloxanes having terminal condensable groups are also suitable.

The polymer (i) may alternatively be an organic based polymer having silyl terminal groups, each bearing at least one hydrolysable group. Typical silyl terminated polymers groups include silyl terminated polyethers, silyl terminated acrylates and silyl terminated polyisobutylenes. The silyl groups utilised will be one or more alternatives described above as X¹ and X₃ as discussed above.

In the case of silyl polyethers, the polymer chain is based on polyoxyalkylene based units (organic). Such polyoxyalkylene units preferably comprise a linear predominantly oxyalkylene polymer comprised of recurring oxyalkylene units, (-CₙH₂ₙ-O-) illustrated by the average formula (-CₙH₂ₙ-O-)ₘ wherein n is an integer from 2 to 4 inclusive and m is an integer of at least four. The number average molecular weight of each polyoxyalkylene polymer block may range from about 300 to about 10,000, but can be higher. Moreover, the oxyalkylene units are not necessarily identical throughout the polyoxyalkylene monomer, but can differ from unit to unit. A polyoxyalkylene block or polymer, for example, can be comprised of oxyethylene units, (-C₂H₄-O-); oxypropylene units (-C₃H₆-O-); or oxybutylene units, (-C₄H₈-O-); or mixtures thereof.

Other polyoxyalkylene units may include for example: units of the structure

-[-R^{e}-O-(-R^{f}-O-)_{w}-Pn-CR^{g}₂-Pn-O-(-R^{f}-O-)_{q}-R^{e}]-

in which Pn is a 1,4-phenylene group, each R^{e} is the same or different and is a divalent hydrocarbon group having 2 to 8 carbon atoms, each R^{f} is the same or different and, is, an ethylene group or propylene group, each R^{g} is the same or different and is, a hydrogen atom or methyl group and each of the subscripts w and q is a positive integer in the range from 3 to 30.

For the purpose of this application "substituted" means one or more hydrogen atoms in a hydrocarbon group has been replaced with another substituent. Examples of such substituents include, but are not limited to, halogen atoms such as chlorine, fluorine, bromine, and iodine; halogen atom containing groups such as chloromethyl, perfluorobutyl, trifluoroethyl, and nonafluorohexyl; oxygen atoms; oxygen atom containing groups such as (meth)acrylic and carboxyl; nitrogen atoms; nitrogen atom containing groups such as amino-functional groups, amido-functional groups, and cyano-functional groups; sulphur atoms; and sulphur atom containing groups such as mercapto groups.

Crosslinkers (ii) that can be used are generally moisture curing
- silanes having at least 2 hydrolysable groups, alternatively at least 3 hydrolysable groups per molecule group; and/or
- silyl functional molecules having at least 2 silyl groups, each silyl group containing at least one hydrolysable group.

In some instances, the crosslinker (ii) having two hydrolysable groups may be considered a chain extender, i.e. when polymer (i) only has 1 or two reactive groups, but can be used to cross-link if polymer (i) has 3 or more reactive groups per molecule. The crosslinker (ii) may thus have two but alternatively has three or four silicon-bonded condensable (preferably hydroxyl and/or hydrolysable) groups per molecule which are reactive with the condensable groups in polymer (i).

For the sake of the disclosure herein silyl functional molecule is a silyl functional molecule containing two or more silyl groups, each silyl group containing at least one hydrolysable group. Hence, a disilyl functional molecule comprises two silicon atoms each having at least one hydrolysable group, where the silicon atoms are separated by an organic or siloxane spacer. Typically, the silyl groups on the disilyl functional molecule may be terminal groups. The spacer may be a polymeric chain.

For the sake of the disclosure herein a disilane is a silyl functional molecule having at least 2 silyl groups where the two silicon atoms are bonded to one another.

The hydrolysable groups on the silyl groups include acyloxy groups (for example, acetoxy, octanoyloxy, and benzoyloxy groups); ketoximino groups (for example dimethyl ketoximo, and isobutylketoximino); alkoxy groups (for example methoxy, ethoxy, and propoxy) and alkenyloxy groups (for example isopropenyloxy and 1-ethyl-2-methylvinyloxy). In some instances, the hydrolysable group may include hydroxyl groups.

The silane cross-linker (ii) may include alkoxy functional silanes, oximosilanes, acetoxy silanes, acetonoxime silanes and/or enoxy silanes.

When the crosslinker is a silane and when the silane has only three silicon-bonded hydrolysable groups per molecule, the fourth group is suitably a non-hydrolysable silicon-bonded organic group. These silicon-bonded organic groups are suitably hydrocarbyl groups which are optionally substituted by halogen such as fluorine and chlorine. Examples of such fourth groups include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. The fourth silicon-bonded organic groups may be methyl.

A typical silane may be described by formula (3)

R"₄₋ᵣSi(OR⁵)ᵣ (3)

wherein R⁵ is described above and r has a value of 2, 3 or 4. Typical silanes are those wherein R" represents methyl, ethyl or vinyl or isobutyl. R" is an organic radical selected from linear and branched alkyls, allyls, phenyl and substituted phenyls, acethoxy, oxime. In some instances, R⁵ represents methyl or ethyl and r is 3.

Another type of suitable crosslinkers (ii) are molecules of the type Si(OR⁵)₄ where R⁵ is as described above, alternatively propyl, ethyl or methyl. Partial condensates of Si(OR⁵)₄ may also be considered.

In one embodiment the cross-linker (ii) is a silyl functional molecule having at least 2 silyl groups each having at least 1 and up to 3 hydrolysable groups, alternatively each silyl group has at least 2 hydrolysable groups.

The crosslinker (ii) may be a disilyl functional polymer, that is, a polymer containing two silyl groups, each containing at least one hydrolysable group such as described by the formula (4)

(R⁴O)ₘ(Y¹)₃₋ₘ - Si (CH₂)ₓ - ((NHCH₂CH₂)ₜ - Q(CH₂)ₓ)ₙ - Si(OR⁴)ₘ(Y¹)₃₋ₘ (4)

where R⁴ is a C₁₋₁₀ alkyl group, Y¹ is an alkyl groups containing from 1 to 8 carbons, Q is a chemical group containing a heteroatom with a lone pair of electrons e.g. an amine, an N-alkylamine or urea; each x is an integer of from 1 to 6, t is 0 or 1; each m is independently 1, 2 or 3 and n is 0 or 1.

The silyl (e.g. disilyl) functional crosslinker (ii) may have a siloxane or organic polymeric backbone. Suitable polymeric crosslinkers (ii) may have a similar polymeric backbone chemical structure to polymeric chain A as depicted in formula (1) above. In the case of such siloxane or organic based cross-linkers the molecular structure can be straight chained, branched, cyclic or macromolecular, i.e. a silicone or organic polymer chain bearing alkoxy functional end groups include polydimethylsiloxanes having at least one trialkoxy terminal where the alkoxy group may be a methoxy or ethoxy group.

In the case of siloxane based polymers the viscosity of the cross-linker will be within the range of from 0.5 mPa.s to 80,000 mPa.s at 25°C using a Brookfield cone plate viscometer (RV DIII) utilising a cone plate (measured in the same manner as polymer (i)). Whilst any of the hydrolysable groups mentioned above are suitable it is preferred that the hydrolysable groups are alkoxy groups and as such the terminal silyl groups may have the formula such as -R^{a}Si(OR^{b})₂, -Si(OR^{b})₃, -R^{a}₂SiOR^{b} or -(R^{a})₂ Si -R^{c}- SiR^{d}ₚ(OR^{b})₃₋ₚ where each R^{a} independently represents a monovalent hydrocarbyl group, for example, an alkyl group, in particular having from 1 to 8 carbon atoms, (and is preferably methyl); each R^{b} and R^{d} group is independently an alkyl group having up to 6 carbon atoms; R° is a divalent hydrocarbon group which may be interrupted by one or more siloxane spacers having up to six silicon atoms; and p has the value 0, 1 or 2. Typically each terminal silyl group will have 2 or 3 alkoxy groups.

Crosslinkers (ii) thus include alkyltrialkoxysilanes such as methyltrimethoxysilane (MTM) and methyltriethoxysilane, tetraethoxysilane, partially condensed tetraethoxysilane, alkenyltrialkoxy silanes such as vinyltrimethoxysilane and vinyltriethoxysilane, isobutyltrimethoxysilane (iBTM). Other suitable silanes include ethyltrimethoxysilane, vinyltriethoxysilane, phenyltrimethoxysilane, alkoxytrioximosilane, alkenyltrioximosilane, 3,3,3-trifluoropropyltrimethoxysilane, methyltriacetoxysilane, vinyltriacetoxysilane, ethyl triacetoxysilane, di-butoxy diacetoxysilane, phenyl-tripropionoxysilane, methyltris(methylethylketoximo)silane, vinyl-tris-methylethylketoximo)silane, methyltris(methylethylketoximino)silane, methyltris(isopropenoxy)silane, vinyltris(isopropenoxy)silane, ethylpolysilicate, n-propylorthosilicate, ethylorthosilicate, dimethyltetraacetoxydisiloxane, oximosilanes, acetoxy silanes, acetonoxime silanes, enoxy silanes and other such trifunctional alkoxysilanes as well as partial hydrolytic condensation products thereof; 1,6-bis (trimethoxysilyl)hexane (alternatively known as hexamethoxydisilylhexane), bis (trialkoxysilylalkyl)amines, bis (dialkoxyalkylsilylalkyl)amine, bis (trialkoxysilylalkyl) N-alkylamine, bis (dialkoxyalkylsilylalkyl) N-alkylamine, bis (trialkoxysilylalkyl)urea, bis (dialkoxyalkylsilylalkyl) urea, bis (3-trimethoxysilylpropyl)amine, bis (3-triethoxysilylpropyl)amine, bis (4-trimethoxysilylbutyl)amine, bis (4-triethoxysilylbutyl)amine, bis (3-trimethoxysilylpropyl)N-methylamine, bis (3-triethoxysilylpropyl) N-methylamine, bis (4-trimethoxysilylbutyl) N-methylamine, bis (4-triethoxysilylbutyl) N-methylamine, bis (3-trimethoxysilylpropyl)urea, bis (3-triethoxysilylpropyl)urea, bis (4-trimethoxysilylbutyl)urea, bis (4-triethoxysilylbutyl)urea, bis (3-dimethoxymethylsilylpropyl)amine, bis (3-diethoxymethyl silylpropyl)amine, bis (4-dimethoxymethylsilylbutyl)amine, bis (4- diethoxymethyl silylbutyl)amine, bis (3-dimethoxymethylsilylpropyl) N-methylamine, bis (3-diethoxymethyl silylpropyl) N-methylamine, bis (4-dimethoxymethylsilylbutyl) N-methylamine, bis (4- diethoxymethyl silylbutyl) N-methylamine, bis (3-dimethoxymethylsilylpropyl)urea, bis (3- diethoxymethyl silylpropyl)urea, bis (4-dimethoxymethylsilylbutyl)urea, bis (4- diethoxymethyl silylbutyl)urea, bis (3-dimethoxyethylsilylpropyl)amine, bis (3-diethoxyethyl silylpropyl)amine, bis (4-dimethoxyethylsilylbutyl)amine, bis (4- diethoxyethyl silylbutyl)amine, bis (3-dimethoxyethylsilylpropyl) N-methylamine, bis (3-diethoxyethyl silylpropyl) N-methylamine, bis (4-dimethoxyethylsilylbutyl) N-methylamine, bis (4- diethoxyethyl silylbutyl) N-methylamine, bis (3-dimethoxyethylsilylpropyl)urea bis (3-diethoxyethyl silylpropyl)urea, bis (4-dimethoxyethylsilylbutyl)urea and/or bis (4- diethoxyethyl silylbutyl)urea; bis (triethoxysilylpropyl)amine, bis (trimethoxysilylpropyl)amine, bis (trimethoxysilylpropyl)urea, bis (triethoxysilylpropyl)urea, bis (diethoxymethylsilylpropyl)N-methylamine; Di or Trialkoxy silyl terminated polydialkyl siloxane, di or trialkoxy silyl terminated polyarylalkyl siloxanes, di or trialkoxy silyl terminated polypropyleneoxide, polyurethane, polyacrylates; polyisobutylenes; Di or triacetoxy silyl terminated polydialkyl; polyarylalkyl siloxane; Di or trioximino silyl terminated polydialkyl; polyarylalkyl siloxane; Di or triacetonoxy terminated polydialkyl or polyarylalkyl. The cross-linker (ii) used may also comprise any combination of two or more of the above.

The molar ratio of hydroxyl groups to hydrolysable groups is between 0.5:1 to 2:1 using a silane cross-linker or 0.5:1 to 10:1, alternatively 0.5:1 to 10:1, alternatively 0.75:1 to 3: 1, alternatively 0.75:1 to 1.5: 1 using a silyl functional cross-linker.

The composition further comprises a condensation catalyst. This increases the speed at which the composition cures. The catalyst chosen for inclusion in a particular silicone composition depends upon the speed of cure required.

Titanate and/or zirconate based catalysts may comprise a compound according to the general formula Ti[OR²²]₄ or Zr[OR²²]₄ where each R²² may be the same or different and represents a monovalent, primary, secondary or tertiary aliphatic hydrocarbon group which may be linear or branched containing from 1 to 10 carbon atoms. Optionally the titanate and/or zirconate may contain partially unsaturated groups. Examples of R²² include but are not restricted to methyl, ethyl, propyl, isopropyl, butyl, tertiary butyl and a branched secondary alkyl group such as 2, 4-dimethyl-3-pentyl. Alternatively, when each R²² is the same, R²² is an isopropyl, branched secondary alkyl group or a tertiary alkyl group, in particular, tertiary butyl. Suitable titanate examples include tetra n-butyl titanate, tetra t-butyl titanate, titanium tetrabutoxide and tetraisopropyl titanate. Suitable zirconate examples include tetra-n-propyl zirconate, tetra-n-butyl zirconate and zirconium diethylcitrate.

Alternatively, the titanate and/or zirconate may be chelated. The chelation may be with any suitable chelating agent such as an alkyl acetylacetonate such as methyl or ethylacetylacetonate. Alternatively, the titanate may be monoalkoxy titanates bearing three chelating agents such as for example 2-propanolato, tris isooctadecanoato titanate or diisopropyldiethylacetoacetate titanate.

The molar ratio of catalyst M-OR functions to total silicon bonded hydroxyl groups is between 0.01:1 and 0.5:1, where M is titanium or zirconium.

The composition herein additionally comprises at least one chemical compound that prevents or scavenges the formation of free radicals (iv) such as primary and/or secondary anti-oxidants and/or suitable anti-corrosive additives. Any suitable material may be utilised.

Primary antioxidants such as typically phenolic based molecules and secondary antioxidants such as typically phosphite based molecules can be used independently or in combination to provide high temperature stabilization of the silicone material.

Examples of primary antioxidants include pentaerythritol tetrakis(3-(3,5-di-tert-butyl-4-hydroxyphenyl)propionate), triethylene glycol bis (3-tert-butyl-4-hydroxy-5-methylphenyl)propionate, 4,4'-thiobis (6-tert-butyl-m-cresol), (2-[1-(2-hydroxy-3,5-di-tert-pentylphenyl)ethyl]-4,6-di-tert-pentylphenyl acrylate), 2,6-di-tert-butyl-4-(4,6-bis (octylthio)-1,3,5-triazin-2- ylamino)phenol, 3,5-bis (1,1-dimethylethyl)-4-hydroxybenzenepropanoic acid thiodi-2,1-ethanediyl ester, 2,4-bis (dodecylthiomethyl)-6-methylphenol, octadecyl 3-(3,5-di-tert-butyl-4-hydroxyphenyl)propionate, N,N'-hexane-1,6-diylbis (3-(3,5-di-tert.-butyl-4-hydroxyphenylpropionamide)), octyl-3,5-di-tert-butyl-4-hydroxy-hydrocinnamate, calcium bis (monoethyl(3,5-di-tert-butyl-4-hydroxylbenzyl)phosphonate], 2,2'-methylenebis (6-tert-butyl-4-methylphenol), (2-propenoic acid,2-(1,1-dimethylethyl)-6-[[3-(1,1-dimethylethyl)-2-hydroxy-5-methylphenyl]methyl]-4-methylphenylester), poly(dicyclopentadiene-co-p-cresol), 2,5-di(tert-amyl)hydroquinone.

Examples of secondary antioxidants include tris (2,4-ditert-butylphenyl)phosphite, O,O'-dioctadecylpentaerythritol bis (phosphite), bis (2,4-di-tert-butylphenyl) pentaerythritol diphosphate.

The at least one chemical compound that prevents or scavenges the formation of free radicals (iv) may alternatively be a suitable anti-corrosion additive, for example, nitrogen/sulphur containing heterocyclic compounds containing a triazole structure, a thiadiazole structure, a benzotriazole structure, a mercaptothiozole structure, a mercaptobenzothiazole structure or a benzimidazole structure, such as 2,5-dimercapto-1,3,4-thiadiazole, N, N-bis (2-Ethylhexyl)-ar-methyl- 1H-benzotriazole-1-methanamine, alkylated diphenylamine, zinc diamyldithiocarbamate, methylene bis (dibutyldithiocarbamate.

The silicone material as hereinbefore described is typically made from the condensation curable silicone material composition which is stored in a 2 part manner. The two part compositions may be mixed using any appropriate standard two-part mixing equipment with a dynamic or static mixer and is optionally dispensed therefrom for use in the application for which it is intended.

In one embodiment, the condensation curable silicone material composition is stored in two parts where said parts may be divided as follows
a) polymer (i) and cross-linker (ii) in one part and polymer (i) and catalyst (iii) in the other part;
b) cross-linker (ii) in one part and polymer (i) and catalyst (iii) in the other part or
c) when more than one polymer (i) is being utilised a first polymer(i) and cross-linker (ii) in one part and a second polymer (i) and catalyst (iii) in the other part,
d) polymer (i) in one part and the cross-linker (ii) and catalyst (iii) in the other part.
In each case, if optional filler is present, in particular moisture containing filler, the filler and catalyst are not in the same part. Typically, when present, filler is mixed with polymer (i) in a base part which may also contain other additives.
The two parts can be mixed in any suitable ratio, e.g. base part: catalyst package for example from 15 : 1 to 1 :1, alternatively 10 : 1 to 1:1, alternatively 5 : 1 to 1 : 1, preferably 1 :1.

Other than the above components, optional components may be blended in the silicone gel composition within a range such that the object of the present invention is achieved.

Examples of optional components include fillers, heat resistance-imparting agents, cold resistance-imparting agents, flame retarders, thixotropy-imparting agents, pigments, surfactant, flux agent, acid acceptor, anti-corrosion additives, dyes and any suitable combination thereof.

Suitable anhydrous filler may be utilised if required.

Should the need arise, the composition may incorporate anhydrous fillers, for example thermally and/or electrically conductive fillers e.g. metallic fillers, anhydrous inorganic fillers and anhydrous meltable fillers, or a combination thereof.

In instances where a filler which contains moisture is added in excess of 0.02 %; (which can be measured in accordance with ISO 787-2:1981) then an additional aliquot of Titanate or zirconate catalyst has to be added to scavenge moisture from the filler.

Metallic fillers include particles of metals and particles of metals having layers on the surfaces of the particles. These layers may be, for example, metal nitride layers or metal oxide layers on the surfaces of the particles. Suitable metallic fillers are exemplified by particles of metals selected from the group consisting of aluminium, copper, gold, nickel, tin, silver, and combinations thereof, and alternatively aluminium. Suitable metallic fillers are further exemplified by particles of the metals listed above having layers on their surfaces selected from the group consisting of aluminium nitride, aluminium oxide, copper oxide, nickel oxide, silver oxide, and combinations thereof. For example, the metallic filler may comprise aluminium particles having aluminium oxide layers on their surfaces.

Inorganic fillers which are anhydrous may be exemplified by onyx; aluminium trihydrate, carbon black, hollow glass beads, metal oxides such as aluminium oxide, beryllium oxide, magnesium oxide, and zinc oxide; nitrides such as aluminium nitride and boron nitride; carbides such as silicon carbide and tungsten carbide; and combinations thereof. Further fillers may include barium titanate, carbon fibres, diamond, graphite, magnesium hydroxide, and a combination thereof.

Meltable fillers may comprise Bi, Ga, In, Sn, or an alloy thereof. The meltable filler may optionally further comprise Ag, Au, Cd, Cu, Pb, Sb, Zn, or a combination thereof. Examples of suitable meltable fillers include Ga, In-Bi-Sn alloys, Sn-In-Zn alloys, Sn-In-Ag alloys, Sn-Ag-Bi alloys, Sn-Bi-Cu-Ag alloys, Sn-Ag-Cu-Sb alloys, Sn-Ag-Cu alloys, Sn-Ag alloys, Sn-Ag-Cu-Zn alloys, and combinations thereof. The meltable filler may have a melting point ranging from 50°C to 250°C, alternatively 150°C to 225°C. The meltable filler may be a eutectic alloy, a non-eutectic alloy, or a pure metal. Meltable fillers are commercially available.

The thermally conductive filler may be a single thermally conductive filler or a combination of two or more thermally conductive fillers that differ in at least one property such as particle shape, average particle size, particle size distribution, and type of filler.

In some embodiments, combinations of metallic and inorganic fillers, such as a combination of aluminium and aluminium oxide fillers; a combination of aluminium and zinc oxide fillers; or a combination of aluminium, aluminium oxide, and zinc oxide fillers may be used. In other embodiments, it may be desirable to combine a first conductive filler having a larger average particle size with a second conductive filler having a smaller average particle size in a proportion meeting the closest packing theory distribution curve. An example would be mixing two aluminium oxide preparations having different average particle sizes.

In other embodiments, different thermally conductive filler materials with difference sizes may be used, for example, a combination of an aluminium oxide having a larger average particle size with a zinc oxide having a smaller average particle size.

Alternatively, it may be desirable to use combinations of metallic fillers, such as a first aluminium having a larger average particle size and a second aluminium having a smaller average particle size. Use of a first filler having a larger average particle size and a second filler having a smaller average particle size than the first filler may improve packing efficiency, may reduce viscosity, and may enhance heat transfer.

The shape of the thermally conductive filler particles is not specifically restricted, however, rounded or spherical particles may prevent viscosity increase to an undesirable level upon high loading of the thermally conductive filler in the composition. The average particle size of the thermally conductive filler will depend on various factors including the type of thermally conductive filler selected and the exact amount added to the curable composition, as well as the bondline thickness of the device in which the cured product of the composition will be used. In some particular instances, the thermally conductive filler may have an average particle size ranging from 0.1 micrometre to 80 micrometres, alternatively 0.1 micrometre to 50 micrometres, and alternatively 0.1 micrometre to 10 micrometres.

Anhydrous reinforcing and/or anhydrous extending fillers include precipitated and ground silica, precipitated and ground calcium carbonate, treated silicas, glass beads, carbon black, graphite, carbon nanotubes, quartz, talc, chopped fibre such as chopped KEVLAR®, filler treating agents or a combination thereof. The filler can also be a siloxane resin comprising R₃SiO_{1/2} units and SiO_{4/2} units, where R is a hydroxyl or a hydrocarbon radical bound directly or via an oxygen atom to the silicon atom.

The thermally conductive filler and/or the anhydrous reinforcing and/or extending filler if present, may optionally be surface treated with a treating agent. Treating agents and treating methods are known in the art. The surface treatment of the filler(s) is typically performed, for example with a fatty acid or a fatty acid ester such as a stearate, or with organosilanes, organosiloxanes, or organosilazanes such as hexaalkyl disilazane or short chain siloxane diols. Generally, the surface treatment renders the filler(s) hydrophobic and therefore easier to handle and obtain a homogeneous mixture with the other components in the composition. Silanes such as

R⁵ₑSi(OR⁶)₄₋ₑ

wherein R⁵ is a substituted or unsubstituted monovalent hydrocarbon group of 6 to 20 carbon atoms, for example, alkyl groups such as hexyl, octyl, dodecyl, tetradecyl, hexadecyl, and octadecyl, and aralkyl groups such as benzyl and phenylethyl, with the alkyl groups of 6 to 20 carbon atoms being preferred., R⁶ is an alkyl group of 1 to 6 carbon atoms, and letter e is equal to 1, 2 or 3 may also be utilised as the treating agent for fillers.

Examples of adhesion promoters include alkoxysilanes of the formula R¹⁴ₕSi(OR¹⁵)₍₄₋ₕ₎, where subscript h is 1, 2, or 3, alternatively h is 3. Each R¹⁴ is independently a monovalent organofunctional group. R¹⁴ can be an epoxy functional group such as glycidoxypropyl or (epoxycyclohexyl)ethyl, an amino functional group such as aminoethylaminopropyl or aminopropyl, a methacryloxypropyl, a mercapto functional group such as mercaptopropyl or an unsaturated organic group. Each R¹⁵ is independently an unsubstituted, saturated hydrocarbon group of at least 1 carbon atom. R¹⁵ may have 1 to 4 carbon atoms, alternatively 1 to 2 carbon atoms. R¹⁵ is exemplified by methyl, ethyl, n-propyl, and iso- propyl.

Further examples of suitable adhesion promoters include glycidoxypropyltrimethoxysilane and a combination of glycidoxypropyltrimethoxysilane with an aluminium chelate or zirconium chelate.

The curable composition may comprise, when present, 0.01% to 2wt.%, alternatively 0.05 to 2 wt.%, alternatively 0.1 to 1 wt. % of adhesion promoter based on the weight of the composition. Preferably, the speed of hydrolysis of the adhesion promoter should be lower than the speed of hydrolysis of the cross-linker in order to favour diffusion of the molecule towards the substrate rather than its incorporation in the product network.

Suitable surfactants include silicone polyethers, ethylene oxide polymers, propylene oxide polymers, copolymers of ethylene oxide and propylene oxide, other non-ionic surfactants, and combinations thereof. The composition may comprise up to 0.05 % of the surfactant based on the weight of the composition.

The composition may comprise up to 2 % of a flux agent based on the weight of the composition. Molecules containing chemically active functional groups such as carboxylic acid and amines can be used as flux agents. Examples of flux agents include aliphatic acids such as succinic acid, abietic acid, oleic acid, and adipic acid; aromatic acids such as benzoic acids; aliphatic amines and their derivatives, such as triethanolamine, hydrochloride salts of amines, and hydrobromide salts of amines. Flux agents are known in the art and are commercially available.

Examples of acid acceptors include magnesium oxide, calcium oxide, and combinations thereof. The composition may comprise up to 2 % of acid acceptor based on the weight of the composition, if appropriate.

There is also provided herein a method of making the silicone material as hereinbefore described whereby the aforementioned two parts of the composition are intermixed and cured.

Subsequent to intermixing in one embodiment the condensation curable gel composition may be applied on to a substrate using a suitable dispenser such as for example curtain coaters, spray devices die coaters, dip coaters, bead application, extrusion coaters, knife coaters and screen coaters which upon cure provides a coating on said substrate.

The silicone material described above has excellent heat resistance at high temperatures of 180°C and above, and the silicone material does not tend to deteriorate when used for a long period at these high temperatures. Furthermore, when used in applications for protecting electronic components the occurrence of air bubbles and cracks in the silicone material can be suppressed even under high-temperature conditions, and further, because it has good bonding to electrical or electronic components, it has the advantage of being able to provide them with high reliability and stability.

The silicone material as hereinbefore described is designed for use in electronics applications, including both microelectronics and macroelectronics applications as well as optoelectronics applications and thermally conductive electronics applications, such as making thermally conductive adhesives. Furthermore, the silicone material of the present invention may be transparent and therefore is potentially suitable for use in light-emitting semiconductor elements such as LEDs.

Cured silicone adhesives prepared from such a curable silicone composition may adhere to various substrates such as electrical or electronic components and/or parts, not least metal substrates such as gold, silver, aluminum, copper, and electroless nickel; as well as polymeric substrates such as FR4, Nylon, polycarbonate, Lucite (which is polymethylmethacrylate, PMMA), polybutylene terephthalate (PBT), and liquid crystal polymers such as Xydar®, available from Solvay Chemicals, Houston, Tex. 77098 USA.

The electrical or electronic components and/or parts may be filled with the silicone material by any appropriate method by, for example, contacting the portion of the electrical or electronic part to be protected with the silicone material, and then curing this composition through condensation cure i.e. by letting it stand at room temperature.

Any suitable electrical or electronic part may be sealed with the silicone material as described above but because the silicone material of the present invention can suppress the occurrence of air bubbles and cracks and exhibits good bonding to electrical or electronic parts even under high-temperature conditions, it can be advantageously used in power devices used under high-temperature conditions, particularly power devices such as a motor control, a motor control for transport, a power generation system, or a space transportation system.

Furthermore, because the silicone material of the present invention has a certain degree of cold resistance in addition to the heat resistance demanded in an Si-C semiconductor chip (for example, heat resistance of 180°C or above). The electronic article can be a power module, e.g. one of more of the aforementioned devices for power converters, inverters, boosters, traction controls, industrial motor controls, power distribution and transportation systems, especially in power devices that demand the ability to withstand sharp temperature differences and can improve the durability and reliability of such power devices.

Examples of such power devices that demand heat resistance and cold resistance include motor controls used in cold regions such as general-purpose inverter controls, servo motor controls, machine tools or elevators, electric vehicles, hybrid cars or motor controls for rail transport used in cold regions, power generating systems used in cold regions such as solar, wind or fuel cell power generators, space transportation systems used in space, and the like. Note that "cold regions" indicates regions where the temperature falls below 0°C.

Furthermore, the silicone material is also effective in sealing electrical or electronic parts having a structure in which the space between electrodes, between electrical elements or between an electrical element and the package in the electrical or electronic part is narrow, or having a structure in which these structures cannot track the expansion and contraction of the silicone material. For example, it may be used in electrical circuits or modules on which electrical elements such as semiconductor elements, capacitors and resistors are mounted, i.e., various sensors such as pressure sensors that are generally sealed or filled with silicone material, and automotive igniters, regulators and the like.

The electronic component may be defined as a chip, such as a silicon chip or a silicon carbide chip, one or more wires, one or more sensors, one or more electrodes, integrated circuits (ICs), e.g. hybrid ICs, power devices, insulated gate bipolar transistor (IGBT), a rectifier such as a Schottky diode, a PiN diode, a merged PiN/Schottky (MPS) rectifier and Junction barrier diode, a bipolar junction transistors (BJTs), a thyristor, a metal oxide field effect transistor (MOSFET), a high electron mobility transistor (HEMT), a static induction transistors (SIT), a power transistor, and the like.

The electronic article may include the electronic component and a first layer. The first layer is not particularly limited and may be a semiconductor, a dielectric, metal, plastic, carbon fibre mesh, metal foil, a perforated metal foil (mesh), a filled or unfilled plastic film (such as a polyamide sheet, a polyimide sheet, polyethylene naphthalate sheet, a polyethylene terephthalate polyester sheet, a polysulphone sheet, a polyether imide sheet, or a polyphenylene sulphide sheet), or a woven or nonwoven substrate (such as fibreglass cloth, fibreglass mesh, or aramid paper). Alternatively, the first layer may be further defined as a semiconductor and/or dielectric film.

The silicone material may be sandwiched between the electronic component and the first layer, and/or may be disposed on and in direct contact with the first layer, and/or on and in direct contact with the electronic component. If the silicone material is disposed on and in direct contact with the first layer, the silicone material may still be disposed on the electronic component but may include one or more layers or structures between the silicone material and the electronic component.

The disclosure also provides a method of forming aforementioned electronic article. The method may include one or more of the aforementioned steps of forming the silicone material, the step of providing the silicone material, and/or the step of providing the electronic component.

Typically, the method includes applying the curable compositions as hereinbefore described onto an electronic component and curing the composition to form a silicone material on the electronic component under the condition sufficient to form the silicone material without damaging the component. The silicone material may be formed on the electronic component.

Alternatively, the silicone material may be formed apart from the electronic component e.g. in a sheet or the like and subsequently be disposed on the electronic component.

### EXAMPLES

In the following examples the silicone material is solely cured via a condensation pathway. All parts are by weight unless otherwise indicated. All viscosity values were measured at 23°C using a Brookfield cone plate viscometer (RV DIII) adapting the cone plate and the speed according to the polymer viscosity.

Materials used:
- Polymer (i): OH terminated polydimethylsiloxane (viscosity ca 13,500 mPa.s)
- Crosslinker (ii): 1,6 bis (trimethoxysilyl) hexane, or 3-mercaptopropyltrimethoxy silane, or Trimethoxysilyl terminated polydimethylsiloxane (viscosity ca 56,000 mPa.s)
- Catalyst: tetra n-butyl titanate
- Antioxidant: Songnox 11B (Phenol-Phosphite Antioxidant Blend available from Songwon Int.)
- Corrosion inhibitor: Cuvan 826 (2,5-dimercapto-1,3,4-thiadiazole derivative available from Vanderbilt Chemicals)
- Comparative 2-parts hydrosilylation gel: Sylgard® 527 Silicone Dielectric, available from Dow Corning Corporation

Examples 1 to 4 features compositions in accordance of the present invention. Comparative examples 1 and 2 feature condensation curable compositions which do not contain a chemical compound that prevents or scavenges the formation of free radicals. Comparative examples 3 and 4 feature hydrosilylation curable compositions. The compositions are detailed in Table 1, where the amounts are measured in parts by weight. The total amount is not expected to necessarily be = 100 parts total.

The compositions are stored in two parts until immediately prior to use when they are appropriately mixed.

The compositions in Examples 1 to 4 were unexpectedly found to be cured in bulk overnight.

**Table 1**

| | Ex 1 | Ex 2 | Ex 3 | Ex 4 | Comp Ex 1 | Comp Ex 2 | Comp Ex 3 | Comp Ex 4 |
|---|---|---|---|---|---|---|---|---|
| **Part A** | | | | | | | | |
| OH terminated polydimethylsiloxane (viscosity ca 13,500 mPa.s) | 50 | 50 | 50 | 50 | 50 | 50 | | |
| Dow Corning® 527 Part A | | | | | | | 50 | 50 |
| 1,6 bisBis (trimethoxysilyl) hexane | 0.4 | | | | 0.4 | | | |
| Songnox® 11B | 0.2 | 0.12 | | | | | | 0.2 |
| Cuvan® 826 | | | 0.3 | | | | | |
| 3-mercaptopropyltrimethoxy silane | | | | 0.3 | | | | |

| **Part B** | | | | | | | | |
|---|---|---|---|---|---|---|---|---|
| OH terminated polydimethylsiloxane (viscosity ca 13,500 mPa.s) | 50 | | | | 50 | | | |
| Dow Corning® 527 Part B | | | | | | | 50 | 50 |
| Trimethoxysilyl terminated polydimethylsiloxane (viscosity ca 56,000 mPa.s) | | 12 | 12 | 12 | | 12 | | |
| tetra n-butyl titanate | 0.08 | 0.04 | 0.04 | 0.04 | 0.08 | 0.04 | | |

Each prepared composition was evaluated after 7 days to determine penetration and softness, using the texture analyser method: A TA XT plus texture analyser was used to monitor the hardness of the cured elastomer. The probe used is a polycarbonate cylinder terminated by a spherical end. The diameter of the probe and sphere is ½ inch. A return to start program was used. The pre-test speed is 5 mm/s and the trigger force is 0.1g. The test speed is 1 mm/s. The probe is inserted to a distance of 5 mm in the product and then removed to a distance where no significant force is measured. The maximum positive and negative force is measured and the positive force is reported in Table 2. A higher positive force is representative of a harder gel/elastomer. A higher negative force is representative of a more tacky gel/elastomer.

**Table 2**

| **Texture analyser strength (g) (positive force)** | Ex 1 | Ex 2 | Ex 3 | Ex 4 | Comp Ex 1 | Comp Ex 2 | Comp Ex 3 | Comp Ex 4 |
|---|---|---|---|---|---|---|---|---|
| 7 days room temperature (RT) | 514 | 139 | 129 | 146 | 195 | 124 | 44 | Not cured |
| 7 days RT + 300h at 225°C | 2012 | 1296 | 910 | 3600 | Hard Crust | Hard Crust | Hard Crust | NA |
| 7 days RT + 1000h at 225°C | 5998 | 6161 | 673 | Hard Crust | Hard Crust | Hard Crust | Hard Crust | NA |

The results in Table 2 indicate the compositions of Examples 1 to 4 according to the invention provide for gels with improved temperature resistance. Indeed, the gels remain in good shape and do not form a crust on the surface as fast as the Comparative examples 1 and 2 which do not contain the antioxidant or anticorrosion additives. Comparative example 3 is not suitable for purpose as it does not withstand the test conditions, while Comparative example 4 does not cure at all in presence of the selected antioxidant.

## Claims

1. A multi part condensation curable silicone composition for making a silicone material and/or elastomer comprising:
(i) at least one condensation curable silyl terminated polymer having at least one, typically at least two hydroxyl functional groups per molecule;
(ii) a cross-linker selected from the group of
• silanes having at least 2 hydrolysable groups, alternatively at least 3 hydrolysable groups per molecule group; and/or
• silyl functional molecules having at least 2 silyl groups, each silyl group containing at least one hydrolysable group,
(iii) a condensation catalyst selected from the group of titanates and/or zirconates, and
(iv) at least one chemical compound that prevents or scavenges the formation of free radicals;
Wherein components (i), (ii) and (iii) are not all in the same part, **characterized in that** the molar ratio of total silicon bonded hydroxyl groups to total hydrolysable groups is between 0.5:1 to 2:1 for silanes and between 0.5:1 and 10:1 for silyl functional molecules; and the molar ratio of catalyst M-OR functions to the total silicon bonded hydroxyl groups is comprised between 0.01:1 and 0.5:1, where M is titanium or zirconium.

2. A multi part condensation curable silicone composition in accordance with claim 1 stored in two parts where said parts may be divided as follows
a) polymer(i) and cross-linker (ii) in one part and polymer (i) and catalyst (iii) in the other part; or
b) cross-linker (ii) in one part and polymer (i) and catalyst (iii) in the other part, or
c) when more than one polymer (i) is being utilised a first polymer(i) and cross-linker (ii) in one part and a second polymer (i) and catalyst (iii) in the other part, or
d) polymer (i) in one part and the cross-linker (ii) and catalyst (iii) in the other part.

3. A multi part condensation curable silicone composition in accordance with claim 1 or 2 wherein the at least one chemical compound that prevents or scavenges the formation of free radicals (iv) is selected from a primary anti-oxidant, a secondary anti-oxidant, an anti-corrosive additive or a mixture thereof.

4. A multi part condensation curable silicone composition in accordance with claim 3 wherein the primary antioxidants are selected from pentaerythritol tetrakis(3-(3,5-di-tert-butyl-4-hydroxyphenyl)propionate), triethylene glycol bis (3-tert-butyl-4-hydroxy-5-methylphenyl)propionate, 4,4'-thiobis (6-tert-butyl-m-cresol), (2-[1-(2-hydroxy-3,5-di-tert-pentylphenyl)ethyl]-4,6-di-tert-pentylphenyl acrylate), 2,6-di-tert-butyl-4-(4,6-bis (octylthio)-1,3,5-triazin-2- ylamino)phenol, 3,5-bis (1,1-dimethylethyl)-4-hydroxybenzenepropanoic acid thiodi-2,1-ethanediyl ester, 2,4-bis (dodecylthiomethyl)-6-methylphenol, octadecyl 3-(3,5-di-tert-butyl-4-hydroxyphenyl)propionate, N,N'-hexane-1,6-diylbis (3-(3,5-di-tert.-butyl-4-hydroxyphenylpropionamide)), octyl-3,5-di-tert-butyl-4-hydroxy-hydrocinnamate, calcium bis (monoethyl(3,5-di-tert-butyl-4-hydroxylbenzyl)phosphonate], 2,2'-methylenebis (6-tert-butyl-4-methylphenol), (2-propenoic acid,2-(1,1-dimethylethyl)-6-[[3-(1,1-dimethylethyl)-2-hydroxy-5-methylphenyl]methyl]-4-methylphenylester), poly(dicyclopentadiene-co-p-cresol), 2,5-di(tert-amyl)hydroquinone and a mixture thereof and/or the secondary antioxidants are selected from tris(2,4-ditert-butylphenyl)phosphite, O,O'-dioctadecylpentaerythritol bis (phosphite), bis (2,4-di-tert-butylphenyl) pentaerythritol diphosphate.

5. A multi part condensation curable silicone composition in accordance with claim 3 wherein the anti-corrosion additive is selected from cyclic compounds containing a triazole structure, a thiadiazole structure, a benzotriazole structure, a mercaptothiozole structure, a mercaptobenzothiazole structure or a benzimidazole structure.

6. A multi part condensation curable silicone composition in accordance with claim 5 wherein the anti-corrosion additive is selected from 2,5-dimercapto-1,3,4-thiadiazole, N, N-bis (2-Ethylhexyl)-ar-methyl- 1H-benzotriazole-1-methanamine, alkylated diphenylamine, zinc diamyldithiocarbamate, and/or methylene bis (dibutyldithiocarbamate.

7. A silicone material which is the condensation reaction product of the multi part condensation curable silicone composition in accordance with any one of claims 1 to 6, comprising the following:
(i) at least one condensation curable silyl terminated polymer having at least one, typically at least two hydroxyl functional groups per molecule;
(ii) a cross-linker selected from the group of
• silanes having at least 2 hydrolysable groups, alternatively at least 3 hydrolysable groups per molecule group; and/or
• silyl functional molecules having at least 2 silyl groups, each silyl group containing at least one hydrolysable group,
(iii) a condensation catalyst selected from the group of titanates and/or zirconates, and
(iv) at least one chemical compound that prevents or scavenges the formation of free radicals;
**characterized in that** the molar ratio of total silicon bonded hydroxyl groups to hydrolysable groups is between 0.5:1 to 2:1 for silanes and between 0.5:1 and 10:1 for silyl functional molecules; and the molar ratio of catalyst M-OR functions to the total silicon bonded hydroxyl groups is comprised between 0.01:1 and 0.5:1, where M is titanium or zirconium.

8. A sealant for electrical or electronic parts, comprising the silicone material of claim 7 or made from the composition of claim 1 to 6.

9. An electrical or electronic part equipped with the silicone material of claim 7.

10. The electrical or electronic part according to claim 9, wherein the electrical or electronic part is a power device.

11. The electrical or electronic part according to claim 10, wherein the power device is a motor control, a motor control for transport, a power generation system, or a space transportation system.

12. A protection method for a semiconductor chip using the multi part condensation curable silicone composition in accordance with any one of claims 1 to 6.

13. Use of a gel made from the silicone material of claim 7 in accordance with for sealing, potting, encapsulating or filling electrical or electronic parts.

14. A method of making a silicone material in accordance with claims 7 by intermixing the multi part composition of claims 1 to 6 and curing the resulting mixture.

15. Use of a silicone material in accordance with claim 7 as an encapsulant or pottant for electronic devices, solar photovoltaic modules and/or light emitting diodes.

16. Use of a gel made from the silicone material in accordance with claim 7 as a pressure sensitive adhesive, or in a vibration or sound dampening application or in the manufacture of laminates, adhesives optically clear coatings, for displays, or wave guides.

17. Use of a silicone material in accordance with claim 7 in a lamination process to laminate substrates together.

18. A method in accordance with claim 14 wherein the mixture is applied onto a substrate prior to cure using a dispenser selected from curtain coaters, spray devices die coaters, dip coaters, extrusion coaters, knife coaters and screen coaters.

## Patentansprüche

1. Mehrteilige kondensationshärtbare Silikonzusammensetzung zum Herstellen eines Silikonmaterials und/oder Elastomers, umfassend:
(i) wenigstens ein kondensationshärtbares silylterminiertes Polymer mit wenigstens einer, typischerweise wenigstens zwei, funktionellen Hydroxygruppen pro Molekül;
(ii) einen Vernetzer, der aus der Gruppe ausgewählt ist, aus:
• Silanen mit wenigstens 2 hydrolysierbaren Gruppen, alternativ wenigstens 3 hydrolysierbaren Gruppen, pro Molekülgruppe; und/oder
• funktionellen Silylmolekülen mit wenigstens 2 Silylgruppen, wobei jede Silylgruppe wenigstens eine hydrolysierbare Gruppe enthält,
(iii) einen Kondensationskatalysator, der aus der Gruppe der Titanate und/oder Zirkonate ausgewählt ist, und
(iv) wenigstens eine chemische Verbindung, die die Ausbildung freier Radikale verhindert oder ausspült;
wobei die Komponenten (i), (ii) und (iii) nicht alle in demselben Teil sind, **dadurch gekennzeichnet, dass** das Molverhältnis der gesamten siliziumgebundenen Hydroxygruppen zu den gesamten hydrolysierbaren Gruppen zwischen 0,5:1 und 2:1 für Silane und zwischen 0,5:1 und 10:1 für funktionelle Silylmoleküle liegt; und das Molverhältnis von M-OR-Funktionen des Katalysators zu den gesamten siliziumgebundenen Hydroxygruppen zwischen 0,01:1 und 0,5:1 enthalten ist, wobei M Titan oder Zirkonium ist.

2. Mehrteilige kondensationshärtbare Silikonzusammensetzung nach Anspruch 1, die in zwei Teilen gespeichert ist, wobei die Teile wie folgt unterteilt sein können:
a) Polymer (i) und Vernetzer (ii) in einem Teil und Polymer (i) und Katalysator (iii) in dem anderen Teil; oder
b) Vernetzer (ii) in einem Teil und Polymer (i) und Katalysator (iii) in dem anderen Teil oder
c) wenn mehr als ein Polymer (i) genutzt wird, ein erstes Polymer (i) und ein Vernetzer (ii) in einem Teil und ein zweites Polymer (i) und ein Katalysator (iii) in dem anderen Teil oder
d) ein Polymer (i) in einem Teil und der Vernetzer (ii) und der Katalysator (iii) in dem anderen Teil.

3. Mehrteilige kondensationshärtbare Silikonzusammensetzung nach Anspruch 1 oder 2, wobei die wenigstens eine chemische Verbindung, die die Ausbildung von freien Radikalen (iv) verhindert oder ausspült, aus einem primären Antioxidationsmittel, einem sekundären Antioxidationsmittel, einem Korrosionsschutzhilfsstoff oder einem Gemisch davon ausgewählt ist.

4. Mehrteilige kondensationshärtbare Silikonzusammensetzung nach Anspruch 3, wobei die primären Antioxidationsmittel aus Folgenden ausgewählt sind: Pentaerythrittetrakis (3-(3,5-di-tert-butyl-4-hydroxyphenyl)propionat), Triethylenglykol-bis(3-tert-butyl-4-hydroxy-5-methylphenyl)propionat, 4,4'-Thiobis(6-tert-butyl-m-cresol), (2-[1-(2-Hydroxy-3,5-di-tert-pentylphenyl)ethyl]-4,6-di-tert-pentylphenylacrylat), 2,6-di-tert-Butyl-4-(4,6-bis(octylthio)-1,3,5-triazin-2-ylamino)phenol, 3,5-bis(1,1-Dimethylethyl)-4-hydroxybenzolpropansäurethiodi-2,1-ethandiylester, 2,4-bis(Dodecylthiomethyl)-6-methylphenol, Octadecyl-3-(3,5-di-tert-butyl-4-hydroxyphenyl)propionat, N,N'-Hexan-1,6-diylbis(3-(3,5-di-tert-butyl-4-hydroxyphenylpropionamid)), Octyl-3,5-di-tert-butyl-4-hydroxyhydrocinnamat, Calcium-bis(monoethyl(3,5-di-tert-butyl-4-hydroxylbenzyl)phosphonat], 2,2'-Methylen-bis(6-tert-butyl-4-methylphenol), (2-Propensäure,2-(1,1-dimethylethyl)-6-[[3-(1,1-dimethylethyl)-2-hydroxy-5-methylphenyl]methyl]-4-methylphenylester), Poly(dicyclopentadien-co-p-cresol), 2,5-di(tert-Amyl)hydrochinon und ein Gemisch davon und/oder die sekundären Antioxidationsmittel aus Folgenden ausgewählt sind: tris(2,4-di-tert-Butylphenyl)phosphit, O,O'-Dioctadecylpentaerythrit-bis(phosphit), bis(2,4-di-tert-butylphenyl)pentaerythritdiphosphat.

5. Mehrteilige kondensationshärtbare Silikonzusammensetzung nach Anspruch 3, wobei der Korrosionsschutzhilfsstoff aus cyclischen Verbindungen ausgewählt ist, die eine Triazolstruktur, eine Thiadiazolstruktur, eine Benzotriazolstruktur, eine Mercaptothiozolstruktur, eine Mercaptobenzothiazolstruktur oder eine Benzimidazolstruktur enthalten.

6. Mehrteilige kondensationshärtbare Silikonzusammensetzung nach Anspruch 5, wobei der Korrosionsschutzhilfsstoff aus 2,5-Dimercapto-1,3,4-thiadiazol, N,N-bis(2-Ethylhexyl)-ar-methyl-1H-benzotriazol-1-methanamin, alkyliertem Diphenylamin, Zinkdiamyldithiocarbamat und/oder Methylen-bis(dibutyldithiocarbamat ausgewählt ist.

7. Silikonmaterial, das das Kondensationsumsetzungserzeugnis der mehrteiligen kondensationshärtbaren Silikonzusammensetzung nach einem der Ansprüche 1 bis 6 ist, Folgendes umfassend:
(i) wenigstens ein kondensationshärtbares silylterminiertes Polymer mit wenigstens einer, typischerweise wenigstens zwei, funktionellen Hydroxygruppen pro Molekül;
(ii) einen Vernetzer, der aus der Gruppe ausgewählt ist, aus:
• Silanen mit wenigstens 2 hydrolysierbaren Gruppen, alternativ wenigstens 3 hydrolysierbaren Gruppen, pro Molekülgruppe; und/oder
• funktionellen Silylmolekülen mit wenigstens 2 Silylgruppen, wobei jede Silylgruppe wenigstens eine hydrolysierbare Gruppe enthält,
(iii) einen Kondensationskatalysator, der aus der Gruppe der Titanate und/oder Zirkonate ausgewählt ist, und
(iv) wenigstens eine chemische Verbindung, die die Ausbildung freier Radikale verhindert oder ausspült;
**dadurch gekennzeichnet, dass** das Molverhältnis der gesamten siliziumgebundenen Hydroxygruppen zu hydrolysierbaren Gruppen zwischen 0,5:1 und 2:1 für Silane und zwischen 0,5:1 und 10:1 für funktionelle Silylmoleküle liegt; und das Molverhältnis von M-OR-Funktionen des Katalysators zu den gesamten siliziumgebundenen Hydroxygruppen zwischen 0,01:1 und 0,5:1 enthalten ist, wobei M Titan oder Zirkonium ist.

8. Dichtstoff für elektrische oder elektronische Teile, umfassend das Silikonmaterial nach Anspruch 7 oder hergestellt aus der Zusammensetzung nach Anspruch 1 bis 6.

9. Elektrisches oder elektronisches Teil, das mit dem Silikonmaterial nach Anspruch 7 ausgestattet ist.

10. Elektrisches oder elektronisches Teil nach Anspruch 9, wobei das elektrische oder elektronische Teil eine Stromvorrichtung ist.

11. Elektrisches oder elektronisches Teil nach Anspruch 10, wobei die Stromvorrichtung eine Motorsteuerung, eine Motorsteuerung für den Transport, ein Stromerzeugungssystem oder ein Raumtransportsystem ist.

12. Schutzverfahren für einen Halbleiterchip unter Verwendung der mehrteiligen kondensationshärtbaren Silikonzusammensetzung nach einem der Ansprüche 1 bis 6.

13. Verwenden eines Gels aus dem Silikonmaterial nach Anspruch 7 in Übereinstimmung mit zum Dichten, Vergießen, Verkapseln oder Füllen von elektrischen oder elektronischen Teilen.

14. Verfahren zum Herstellen eines Silikonmaterials nach Anspruch 7 durch Vermischen der mehrteiligen Zusammensetzung nach Ansprüchen 1 bis 6 und Härten des resultierenden Gemisches.

15. Verwenden eines Silikonmaterials nach Anspruch 7 als eine Verkapselung oder eine Vergussmasse für elektronische Vorrichtungen, Solar-Fotovoltaikmodule und/oder Leuchtdioden.

16. Verwenden eines aus dem Silikonmaterial hergestellten Gels nach Anspruch 7 als einen Haftklebstoff oder in einer schwingungs- oder schalldämpfenden Anwendung oder bei der Fertigung von Laminaten, klebenden optisch klaren Beschichtungen für Anzeigen oder Wellenleiter.

17. Verwenden eines Silikonmaterials nach Anspruch 7 in einem Laminierungsvorgang, um Substrate zusammen zu laminieren.

18. Verfahren nach Anspruch 14, wobei das Gemisch vor dem Härten auf ein Substrat aufgetragen wird, unter Verwendung eines Spenders, der aus Folgenden ausgewählt ist: Vorhangbeschichtungsvorrichtungen, Sprühvorrichtungen Form-Auftragsmaschinen, Tauchbeschichtungsvorrichtung, Extrusionsbeschichtungsvorrichtungen, Messerstreichbeschichtungsvorrichtung und Siebbeschichtungsvorrichtungen.

## Revendications

1. Composition de silicone durcissable par condensation en plusieurs parties pour la fabrication d'un matériau à base de silicone et/ou d'un élastomère comprenant :
(i) au moins un polymère à terminaison silyle durcissable par condensation comportant au moins un, typiquement au moins deux groupes fonctionnels hydroxyle par molécule ;
(ii) un agent de réticulation choisi dans le groupe des
• silanes comportant au moins 2 groupes hydrolysables, alternativement au moins 3 groupes hydrolysables par groupe de molécules ; et/ou de
• molécules fonctionnelles silyle comportant au moins 2 groupes silyle, chaque groupe silyle contenant au moins un groupe hydrolysable,
(iii) un catalyseur de condensation choisi dans le groupe des titanates et/ou des zirconates, et
(iv) au moins un composé chimique qui empêche ou élimine la formation de radicaux libres ;
dans laquelle les composants (i), (ii) et (iii) n'appartiennent pas tous à la même partie, **caractérisée en ce que** le rapport molaire des groupes hydroxyle liés au silicium totaux aux groupes hydrolysables est compris entre 0,5:1 et 2:1 pour les silanes et entre 0,5:1 et 10:1 pour les molécules fonctionnelles silyle ; et le rapport molaire des fonctions M-OR du catalyseur aux groupes hydroxyle liés au silicium totaux est compris entre 0,01:1 et 0,5:1, où M représente le titane ou le zirconium.

2. Composition de silicone durcissable par condensation en plusieurs parties selon la revendication 1, stockée en deux parties, lesdites parties pouvant être divisées comme suit
a) un polymère (i) et un agent de réticulation (ii) dans une partie et un polymère (i) et un catalyseur (iii) dans l'autre partie ; ou
b) un agent de réticulation (ii) dans une partie et un polymère (i) et un catalyseur (iii) dans l'autre partie, ou
c) lorsque plus d'un polymère (i) est utilisé, un premier polymère (i) et un agent de réticulation (ii) dans une partie et un second polymère (i) et un catalyseur (iii) dans l'autre partie, ou
d) le polymère (i) dans une partie et l'agent de réticulation (ii) et le catalyseur (iii) dans l'autre partie.

3. Composition de silicone durcissable par condensation en plusieurs parties selon la revendication 1 ou 2, dans laquelle l'au moins un composé chimique qui empêche ou élimine la formation de radicaux libres (iv) est choisi parmi un anti-oxydant primaire, un anti-oxydant secondaire, un additif anti-corrosif ou un mélange de ceux-ci.

4. Composition de silicone durcissable par condensation en plusieurs parties selon la revendication 3, dans laquelle les antioxydants primaires sont choisis parmi le pentaérythritol tétrakis(3-(3,5-di-tert-butyl-4-hydroxyphényl)propionate), le triéthylène glycol bis (3-tert-butyl-4-hydroxy-5-méthylphényl)propionate, le 4,4'-thiobis (6-tert-butyl-m-crésol), le (2-[1-(2-hydroxy-3,5-di-tert-pentylphényl)éthyl]-4,6-di-tert-pentylphényl acrylate), le 2,6-di-tert-butyl-4-(4,6-bis(octylthio)-1,3,5-triazine-2-ylamino)phénol, l'acide 3,5-bis (1,1-diméthyléthyl)-4-hydroxybenzènepropanoïque ester thiodi-2,1-éthanediyle, le 2,4-bis(dodécylthiométhyl)-6-méthylphénol, l'octadécyle 3-(3,5-di-tert-butyl-4-hydroxyphényl)propionate, le N,N'-hexane-1,6-diylbis (3-(3,5-di-tert-butyl-4-hydroxyphénylpropionamide)), l'octyl-3,5-di-tert-butyl-4-hydroxy-hydrocinnamate, le bis (monoéthyl(mono-3,5-di-tert-butyl-4-hydroxylbenzyl)phosphonate de calcium], le 2,2'-méthylènebis (6-tert-butyl 4-méthylphénol), le (acide 2-propénoïque,2-(1,1-diméthyléthyl)-6-[[3-(1,1-diméthyléthyl)-2-hydroxy-5-méthylphényl]méthyl]-4-méthylphénylester), le poly (dicyclopentadiène-co-p-crésol), la 2,5-di(tert-amyl)hydroquinone et des mélanges de ceux-ci et/ou les antioxydants secondaires sont choisis parmi le tris(2,4-ditert-butylphényle)phosphite, l'O.O'-dioctadécylpentaérythritol bis (phosphite), le bis (2,4-di-tert-butylphényl) pentaérythritol diphosphate.

5. Composition de silicone durcissable par condensation en plusieurs parties selon la revendication 3, dans laquelle l'additif anti-corrosion est choisi parmi les composés cycliques contenant une structure triazole, une structure thiadiazole, une structure benzotriazole, une structure mercaptothiozole, une structure mercaptobenzothiazole ou une structure benzimidazole.

6. Composition de silicone durcissable par condensation en plusieurs parties selon la revendication 5, dans laquelle l'additif anti-corrosion est choisi parmi le 2,5-dimercapto-1,3,4-thiadiazole, le N, N-bis (2-éthylhexyl)-ar-méthyl- 1H-benzotriazole-1-méthanamine, la diphénylamine alkylée, le diamyldithiocarbamate de zinc et/ou le méthylène bis (dibutyldithiocarbamate).

7. Matériau de silicone qui est le produit de réaction de condensation de la composition de silicone durcissable par condensation en plusieurs parties selon l'une quelconque des revendications 1 à 6, comprenant les éléments suivants :
(i) au moins un polymère à terminaison silyle durcissable par condensation comportant au moins un, typiquement au moins deux groupes fonctionnels hydroxyle par molécule ;
(ii) un agent de réticulation choisi dans le groupe des
• silanes comportant au moins 2 groupes hydrolysables, alternativement au moins 3 groupes hydrolysables par groupe de molécules ; et/ou
• des molécules fonctionnelles silyle comportant au moins 2 groupes silyle, chaque groupe silyle contenant au moins un groupe hydrolysable,
(iii) un catalyseur de condensation choisi dans le groupe des titanates et/ou des zirconates, et
(iv) au moins un composé chimique qui empêche ou élimine la formation de radicaux libres ;
**caractérisé en ce que** le rapport molaire des groupes hydroxyle liés au silicium totaux aux groupes hydrolysables est compris entre 0,5:1 et 2:1 pour les silanes et entre 0,5:1 et 10:1 pour les molécules fonctionnelles silyle ; et le rapport molaire des fonctions M-OR du catalyseur aux groupes hydroxyle liés au silicium totaux est compris entre 0,01:1 et 0,5:1, où M représente le titane ou le zirconium.

8. Scellant pour pièces électriques ou électroniques, comprenant le matériau de silicone selon la revendication 7 ou réalisé à partir de la composition selon les revendications 1 à 6.

9. Pièce électrique ou électronique équipée du matériau de silicone selon la revendication 7.

10. Composant électrique ou électronique selon la revendication 9, dans lequel la partie électrique ou électronique est un dispositif de puissance.

11. Composant électrique ou électronique selon la revendication 10, dans lequel le dispositif de puissance est une commande de moteur, une commande de moteur pour le transport, un système de production d'énergie ou un système de transport spatial.

12. Procédé de protection d'une puce semi-conductrice utilisant la composition de silicone durcissable par condensation en plusieurs parties selon l'une quelconque des revendications 1 à 6.

13. Utilisation d'un gel à base de silicone selon la revendication 7, permettant de sceller, d'enrober, d'encapsuler ou de remplir des pièces électriques ou électroniques.

14. Procédé de fabrication d'un matériau de silicone selon la revendication 7, par le mélange de la composition en plusieurs parties des revendications 1 à 6 et le durcissement du mélange qui en résulte.

15. Utilisation d'un matériau de silicone selon la revendication 7 comme agent d'encapsulation ou de pot pour des dispositifs électroniques, des modules photovoltaïques solaires et/ou des diodes électroluminescentes.

16. Utilisation d'un gel constitué du matériau de silicone selon la revendication 7, comme adhésif sensible à la pression, ou dans une application d'amortissement des vibrations ou du son ou dans la fabrication de stratifiés, les revêtements adhésifs optiquement transparents, pour des affichages ou des guides d'ondes.

17. Utilisation d'un matériau de silicone selon la revendication 7 dans un procédé de stratification pour stratifier des substrats ensemble.

18. Procédé selon la revendication 14, dans lequel le mélange est appliqué sur un substrat avant le durcissement à l'aide d'un distributeur choisi parmi les dispositifs de revêtement à rideau, les dispositifs de pulvérisation, les dispositifs de revêtement à filière, les dispositifs de revêtement à immersion, les dispositifs de revêtement à extrusion, les dispositifs de revêtement à couteau et les dispositifs de revêtement à tamis.
